# EUROPEAN PATENT APPLICATION

(11) **EP 1 647 985 A1**
(43) Date of publication of application: **19.04.2006**
(21) Application number: 04292436.5
(22) Date of filing: 13.10.2004
(51) Int. Cl.: G11B 20/10

(54) **Apparatus for optical recording media**

(71) Applicant: Thomson Licensing, 92100 Boulogne-Billancourt (FR)
(72) Inventor: Leung, Lap Fung, North Point, Hong Kong (CN); Tse, Hong Wing, c/o 7/Fl., Room A, New Territories, Hong Kong (CN); Durgeat, Laurent, c/o 59A Tower 2, Kowloon, Hong Kong (CN)
(74) Representative: Thies, Stephan

(57) **Abstract**

The present invention relates to an apparatus for reading from and/or writing to optical recording media capable of handling different types of multimedia files.

According to the invention, an apparatus for reading from and/or writing to optical recording media includes:
- an optical pickup (1) for a first type of optical recording medium (3), and
- a chipset (4) for a second, more advanced type of optical recording medium, the chipset being capable of handling different types of multimedia files.

## Description

The present invention relates to an apparatus for reading from and/or writing to optical recording media capable of handling different types of multimedia files.

Currently more and more compressed audio and video content such as JPEG, Moving JPEG, MP3, DiVx or MPEG 4 becomes available. Consequently, there is an increasing need to playback these contents on portable devices. Though the above multimedia formats are supported by common DVD chipsets, which are used in stationary DVD players, portable DVD players have not yet become very popular. This is on the one hand due to the fact that at the time being DVD pickups are too bulky, expensive, and power consuming to be conveniently used in portable devices. On the other hand, DVD recorders for generating a personal DVD are not yet widespread and recordable DVDs are expensive.

It is, therefore, an object of the invention to propose a convenient apparatus for reading from and/or writing to optical recording media capable of handling different types of multimedia files.

According to the invention, this object is achieved by an apparatus for reading from optical recording media, including:
- an optical pickup exclusively for a first type of optical recording medium, and
- a chipset for a second, more advanced type of optical recording medium, the chipset being capable of handling different types of multimedia files.
   Favourably, a DVD chipset, which supports a plurality of multimedia formats, is used in combination with a CD-pickup for a portable player. In this case the major task is to adapt the servo control of the DVD chipset to the CD-pickup to have a stable control loop. For products using a DVD-pickup, this servo matching is done by the manufacturer of the chipset, who has the know-how of the chipset and the source code of the software. In the case of a product according to the invention, however, this servo matching has to be specifically realized using both hardware and software. A further problem that has to be approached is that a DVD chipset usually consumes more power than a CD chipset, as it is not meant for portable usage.

At the time being the most affordable storage medium is the CD-ROM. Furthermore, as CD-ROM drives are generally available in a PC while DVD-ROM drives are not as widespread, it is common in the PC world to store available multimedia files on CD-ROM. The apparatus according to the invention fills the gap between traditional portable CD media players and DVD media players by offering both audio and video content from CD media instead of DVD media. This allows to address the fast growing availability of compressed video and audio content, which can easily be stored on CD media instead of DVD media. Of course, not all available features which a DVD chipset provides are necessarily used. Furthermore, the invention is likewise applicable to an apparatus which is also capable of writing.

By using the DVD chipset with a CD pickup, production cost and product size are reduced. At the same time the battery lifetime is increased, as a CD pickup consumes less power than a DVD pickup. In addition, since the DVD chipset supports all desired features, it is not necessary to use different discrete ICs to provide specific features or to design a completely new IC. In comparison with other portable devices such as hard disk drive media players, the apparatus according to the invention has the advantage that the multimedia files are permanently stored on the optical recording medium and can be archived.

Of course, the invention is not limited to an apparatus using a CD pickup and a DVD chipset. It is likewise possible to combine other advanced chipsets (e.g. for BD (BluRay Disk), AOD (Advanced Optical Disk) or other available or future disk formats) with a CD pickup or any other pickup for a less advanced optical recording medium. For example, a similar approach would be to use a BD chipset with a CD pickup or a DVD pickup.

According to a further aspect of the invention, instead of a DVD chipset a general purpose DSP (digital signal processor) and ARM (advanced RISC) or RISC (reduced instruction set computer) processor is used. In this case, however, a larger effort for designing the system is necessary.

For a better understanding the invention shall now be explained in more detail in the following description with reference to the figure. It is understood that the invention is not limited to this exemplary embodiment and that specified features can also expediently be combined and/or modified without departing from the scope of the present invention. In the figures:

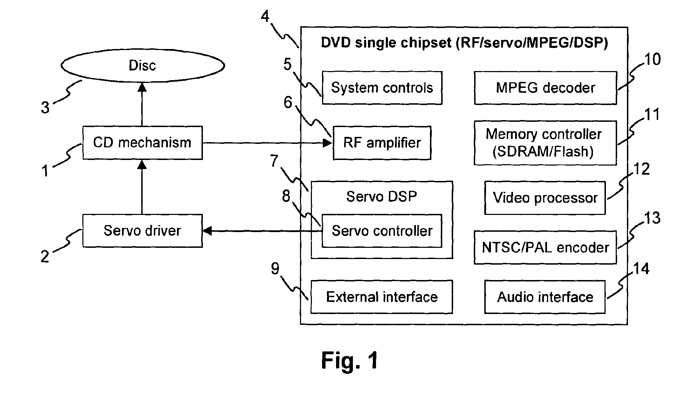

- Fig. 1: shows an apparatus for reading from and/or writing to optical recording media according to the invention.

In Fig. 1 an apparatus according to the invention is shown schematically. A CD pickup 1 is used for reading data from an optical recording medium 3, in this case from a CD. The pickup is used with a DVD single chipset 4. The servo control is performed by a servo controller 8 of the DVD chipset via a servo driver 2. The DVD chipset includes a plurality of units which are necessary for CD playback, such as a system control 5, which controls all the activities within the system, an amplifier 6 for the data signal read by the pickup 1, which produces an appropriate RF signal for further processing and the closed loop control system, a servo DSP 7 including the servo controller 8 for producing the servo control signals for the CD mechanism and for performing data correction of the RF signal, an external interface 9, which is a general purpose input/output (GPIO) interface and general bus interface controller, and an audio interface 14 for producing an analog audio signal for a connected external output device. In addition, however, the DVD chipset includes further units which are used for providing advanced features. These units include an MPEG decoder 10 for decoding the MPEG data from the RF signal to produce the video and audio data, a memory controller 11, which is employed for buffer management using an external memory to enable a "shock proof" capability, and which allows to communicate with an external storage card, a video processor 12 for reproducing the correct format of the digital video data out of the MPEG data, and an NTSC/PAL encoder 13 for producing a NTSC/PAL compatible signal for a connected external output device. Of course, not all these units are necessarily used.

## Claims

1. Apparatus for reading from and/or writing to optical recording media, including:
- an optical pickup (1) exclusively for a first type of optical recording medium (3), and
- a chipset (4) for a second, more advanced type of optical recording medium, the chipset being capable of handling different types of multimedia files.

2. Apparatus according to claim 1, **characterized in that** the optical pickup (1) is a CD pickup and the chipset (4) is a DVD chipset.

3. Apparatus according to claim 1, wherein instead of a chipset (4) for a second, more advanced type of optical recording medium, a general purpose DSP and ARM or RISC processor is used.

4. Apparatus according to one of claims 1 to 3, **characterized in that** the multimedia files are compressed audio and/or video files.

5. Apparatus according to claim 4, **characterized in that** the compressed audio and/or video files are MP3, JPEG or MPEG files.

6. Apparatus according to one of claims 1 to 5, **characterized in that** it is portable.
